(19) Europäisches Patentamt
European Patent Office
Office européen des brevets

(11) **EP 3 702 971 A1**

(12) **EUROPEAN PATENT APPLICATION**

(43) Date of publication:
**02.09.2020 Bulletin 2020/36**

(21) Application number: **19159652.7**

(22) Date of filing: **27.02.2019**

(51) Int Cl.:
**G06N 3/04** *(2006.01)* **G06N 3/08** *(2006.01)*
**B60W 30/09** *(2012.01)* **G05D 1/00** *(2006.01)*
**B60W 50/04** *(2006.01)* **B60W 50/00** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Autonomous Intelligent Driving GmbH 80805 München (DE)**

(72) Inventors:
• FERRONI, Francesco
81397 München (DE)
• POSTELS, Janis
85356 Freising (DE)

(74) Representative: **Hofstetter, Schurack & Partner Patent- und Rechtsanwaltskanzlei PartG mbB Balanstrasse 57 81541 München (DE)**

(54) **METHOD FOR ESTIMATING THE UNCERTAINTY OF A RECOGNITION PROCESS IN A RECOGNITION UNIT; ELECTRONIC CONTROL UNIT AND MOTOR VEHICLE**

(57) The invention is concerned with a method for estimating the uncertainty of a recognition process (28) in a recognition unit (24), wherein the recognition unit (24) receives input data (26) describing at least one object (17) in surroundings (18) of the recognition unit (24) and generates output data (23) describing a recognition result concerning the at least one object (17), wherein uncertainty data (29) regarding the recognition result is determined, wherein a respective noise model (43) of a noise (44) is associated with nodes (33) of a predefined subset (42) of nodes (33) of a neural network (27) of the recognition unit (28) and starting from the nodes (33) of the subset (42) the noise (44) is propagated to the at least one output layer (32), wherein propagating the noise (44) comprises that at each node (n) that receives the noise (44) from its respective preceding nodes (35) the variance value ($V_n$) of the noise (44) of that node (n) is calculated from the variance values ($V_1$, $V_2$, $V_k$) of the respective predefined preceding nodes (35) by means of a predefined variance propagation function (P).

Fig.1

**Description**

The invention is concerned with a method for estimating the uncertainty of a recognition process in a recognition unit. Such a recognition unit may be provided in a driving system for automated and/or autonomous driving. The invention also provides an electronic control unit that is designed to perform the inventive method. The invention also provides a motor vehicle comprising the inventive electronic control unit.

Artificial neural networks have found many applications in tasks such as computer vision in automated and autonomous driving. The problem is that the majority of these neural networks give point estimates as output data without any notion of their uncertainty. This is a problem in safety critical environments such as autonomous driving since uncertainty may define planning and system behavior (e.g. be more or less aggressive at an intersection).

Uncertainty in neural networks is an active topic of research, taking the name (generally) as Bayesian deep learning. The latest methods that are applied to modern neural networks are either variational inference, or Monte-Carlo (MC) based sampling techniques. A prior-art of MC sampling is e.g. published by Yarin et al. (https://arxiv.org/pdf/1506.02142.pdf). A prior-art of variational inference is published by Hinton et al. (www.cs.toronto.edu/~fritz/absps/nlgbn.pdf, https://arxiv.org/abs/1312.6114).

The draw-back of MC sampling is that, since it is based on sampling (recursively applying inference on input data with noise), it is very computationally expensive, and therefore not suitable for online, real-time problems such as detecting objects on an embedded computer in an autonomously driving vehicle.

It is an object of the present invention to provide uncertainty data that describe the uncertainty associated with a specific recognition process in which an artificial neural network provides output data as a recognition result as an answer to specific input data, like e.g. sensor data. Another term for "recognition process" is "inference".

The object is accomplished by the subject matter of the independent claims. Advantageous developments with convenient and non-trivial further embodiments of the invention are specified in the following description, the dependent claims and the figures.

The invention provides a method for estimating or evaluating the uncertainty of a recognition process in a recognition unit. Such a recognition unit may be provided for detecting and/or recognizing at least one object on the basis of sensor data, like e.g. image data and/or radar data and/or lidar data. The recognition unit may be a software or computer program that may be running on a processing device of an electronic control unit of a vehicle. The method assumes that the recognition unit receives input data describing at least one object in the surroundings of the recognition unit and generates output data describing a recognition result concerning the at least one object (i.e. the object may be detected and/or classified). In addition to the output data, by means of the method, uncertainty data regarding the recognition result (i.e. the output data) is also determined.

According to the method, the recognition process comprises that the recognition unit operates an artificial neural network. In the following, the "artificial neural network" is also termed "neural network" (in order to simplify the description). The neural network comprises at least one input layer with nodes for receiving the input data and at least one output layer with nodes for generating the output data and at least one hidden layer with nodes for connecting the at least one input layer to the at least one output layer. The wording "at least one" means "one or more than one" in each respective case. Another term for "node" is "artificial neuron" or "unit". The nodes are interconnected by links which connect the node to form the neural network. The links between the nodes may be defined by the type of the neural network. The links define the structure of the neural network. By these links, the nodes of the at least one hidden layer and the at least one output layer are each linked to respective preceding ones of the nodes of the network. In other words, from the point of view of each node of the at least one hidden layer and the at least one output layer, these nodes receive values from their respective preceding nodes during the recognition process. These values are termed "activation values" in the following. That is to say, from the point of view of each of these nodes, there are preceding nodes that each provide or deliver an activation value to the respective node. Likewise, each node of the at least one hidden layer delivers its own activation value to at least one following node, i.e. to at least one node of another hidden layer and/or an output layer. In the case of a recursive neural network (where links may end at at least one node of an input layer), a node from an input layer may receive an activation value from at least one other node.

In the recognition process, the nodes of the at least one hidden layer and the at least one output layer calculate their own respective activation value by means of a predefined "firing function" from the activation values of the respective preceding nodes. Nodes from the input layer may generate their respective activation value on the basis of the input data. The activation values generated by the nodes of the at least one output layer may be provided as the output data. This recognition process generally applies to any artificial neural network.

In this context, when a neural networks generates output data from input data, it is of interest to measure or quantify the uncertainty associated with the output data. For example, if the recognition process comprises detecting or recognizing an object on the basis of image data that were obtained at bright daylight, the object may be clearly visible in the image data. If the same object is to be detected on the basis of image data that were obtained in the dark or at twilight, the neural network will also provide a recognition result like in the case of image data from bright daylight.

Therefore, from the output data alone, it cannot be decided, how "sure" or certain the neural network is regarding the recognition result.

The invention provides a solution that generates uncertainty data for expressing or describing the epistemic uncertainty, but without the use of sampling. The term "epistemic" refers to the fact that the uncertainty data do not describe a general uncertainty of the neural network, but rather the uncertainty that is associated with a specific recognition process, i.e. that is linked to specific output data of the neural network and may therefore describe the current recognition situation.

According to the method, a predefined subset of the nodes of the network is defined and a respective noise model of a noise comprising a variance value is associated with each of the nodes of the subset. In other words, a calculation is performed that resembles the injection of noise at certain nodes in the neural network (i.e. at the nodes of the subset). Said subset of nodes can be, e.g. the nodes of a specific hidden layer or of several hidden layers and/or the nodes of an output layer or of several output layers. For example, the nodes of the ultimate hidden layer and/or the penultimate hidden layer and/or the 3rd-last hidden layer may be chosen to constitute the subset.

Note that the "injection" of the noise is only meant to be understood figuratively, as will be explained shortly. Once the noise is injected into the neural network at the nodes of the subset, the noise will propagate through the network until it reaches the nodes of the at least one output layer. Only for the sake of understanding, it is stated here that by injecting noise into the neural network, it is measured how easily the neural network will deviate from its original recognition result, i.e. from the output data. This sensitivity to the noise may be interpreted as a degree of uncertainty.

However, the noise will not be injected during the recognition process, i.e. the actual output data are calculated from the input data without the influence of the noise. Then, once the output data are calculated, the noise is virtually "injected" into the neural network while the neural network is still in the state it took from the recognition process, when the activation values of each of the nodes are known or present. As has been explained above, the "injection" of the noise does not require that a noise process needs to be sampled. Instead, the method calculates how the variance of the injected noise would change while the noise is propagated through the network. This does not require sampling a noise process (i.e. repeating the recognition process several times with noise added to the nodes of said subset). Instead, only one calculation of the propagation of the variance values is needed.

To this end, by the inventive method, starting from the nodes of said subset of nodes, the variance value of the respective associated noise model is propagated through the neural network to the at least one output layer, wherein propagating the variance values comprises that each node that receives the variance values from its respective preceding nodes calculates its own variance value from the received variance values of the respective preceding nodes by means of a predefined variance propagation function. The variance propagation function defines how the variance value of the noise, as it results at a specific node, is calculated from the variance values of the preceding nodes.

Finally, the resulting variance values of the nodes of the at least one output layer are provided as the uncertainty data. In other words, the variance of the noise as it is arrives at the at least one output layer is a measure for quantifying the uncertainty of the neural network when each of the nodes of the neural network is in the state that it took due to the recognition process.

The invention provides the advantage that no sampling or repetitions of the recognition process itself needs to be performed in order to quantify the uncertainty of the neural network with regard to specific output data. Nevertheless, the method provides an approximation of said sampling method.

The invention also comprises embodiments that provide features which afford additional technical advantages.

In one embodiment the variance propagation function of the respective node comprises that the respective variance value of each of the respective preceding nodes is weighted or multiplied by a weighting factor value that is based on the gradient or partial derivative of the firing function or a predefined approximation of that partial derivative, wherein the partial derivative is calculated with respect to the activation value of the respective preceding node. In other words, it is considered how steep or how flat the firing function is at the specific point or state of the preceding node as defined by its activation value. A flat firing function (partial derivative or gradient smaller than 1) will reduce the variance value that is passed on or propagated to the following node, a steep firing function (partial derivative or gradient greater than 1) will increase the variance value that is passed on to the following node. As the partial derivative is calculated with respect to the activation value, this is a way of considering the current state of each preceding node. As an example for calculating a variance value $V_n$ of a node n from the variance values $V_1$, $V_2$,...$V_k$ of the k preceding nodes (with k a natural number), it may be assumed that the activation value $X_n$ of node n is calculated on the basis of a firing function $F(X_1, X_2,..., X_k)$ from the activation values $X_1, X_2,..., X_k$ of the k preceding nodes. The symbol "..." represents that fact that overall, 2 or more than 2 preceding nodes may exist and all k preceding node shall be considered. The partial derivatives of the firing function F with regard to the respective activation values $X_1, X_2,..., X_k$ may then be denoted as $\delta F/\delta X_1$ for $X_1$, $\delta F/\delta X_2$ for $X_2$ and $\delta F/\delta X_k$ for $X_k$. The calculation of a partial derivative for a given firing function F is known to the skilled person.

In one embodiment, in the variance propagation function a value of the local partial derivative or its approximation is square and the squared value is used as a factor for multiplying the respective variance value. This provides the advantage that the propagation of a real noise through the network is simulated. One embodiment for calculating the variance value Vn of a node n from the variance values V1, V2,..., Vk of its k preceding nodes can therefore be expressed by the following equation:

$$Vn = (\delta F/\delta X1)^2 * V1 + (\delta F/\delta X2)^2 * V2 + \ldots + (\delta F/\delta Xk)^2 * Vk$$

with * the multiplication operation.

In one embodiment the 1 st order Taylor expansion of the firing function is used as the partial derivative. More generally, the variance propagation function comprises that the squared value of the first order Taylor expansion of the firing function is used. The 1 st (first) order Taylor expansion provides a reliable way for approximating the variance of a node or unit after applying the activation function given the variance prior to the activation function. It has been discovered that using the 1st order Taylor expansion is sufficient for providing meaningful or significant uncertainty data. Note that in the case of a firing function that is an affine function or a linear function, the 1st order Taylor expansion even provides the exact solution.

In one embodiment the firing function of each respective node comprises the steps of weighting the respective activation value of each preceding node with a respective individual link weighting value, summing-up the weighted activation values and applying an activation function $\varphi$ to the summed-up weighted activation values, wherein the output of the activation function is the activation value of the node itself. For example, for the above example and assuming that the weighting values for the preceding nodes may be denoted as W1, W2,..., Wk, the activation value Xn of node n may be calculated by the following equation:

$$xn = \varphi( W1 * X1 + W2 * X2 + \ldots + Wk * Xk )$$

wherein activation function $\varphi$ can be, for example, the function tanh or sinh or ReLU (rectifier linear unit) or a sigmoid function, as is known from the prior art. Using the 1st order Taylor expansion or the partial derivative of this firing function provides the advantage that only multiplying operations and addition operations are needed for calculating the variance values. This increases the speed for calculating the uncertainty data.

In one embodiment the respective noise model provides a variance value that is a function of the squared value of the activation value of the node the model is associated to. In other words, if the activation value is, for example, X1, then the variance value would be proportional to the squared value, i.e. $(X1)^2$. This provides the advantage that the power of the noise is a function of the contribution of that node to the recognition result or the output data. This delivers more realistic uncertainty data.

In one embodiment, for modelling the noise in the respective noise model, a predefined drop-out rate p of the nodes of the described subset is defined and the variance value of the noise of that noise model is given as or is proportional to p*(1-p). This provides the advantage that the method may even simulate the MC sampling method that was already described. Alternatively, the respective noise model models a predefined analytically-defined noise source. In one embodiment, such a noise source is a Gaussian noise source describing a Gaussian noise. Preferably, each noise model provides a zero-mean noise, i.e. a noise with a mean value of 0. This provides the advantage that only variance values need to be propagated.

In one embodiment, the recognition process provides output data that comprise a regression calculation for the input data. Alternatively, the output data may provide a classification result for the input data. The special advantage for providing uncertainty data for a regression calculation is that a regression calculation is otherwise difficult to evaluate with regards to uncertainty.

In one embodiment, a driving system for automated and/or autonomous driving of a vehicle is controlled on the basis of the uncertainty data. This provides the advantage that the driving system may react to the degree of uncertainty associated to or regarding the output data of the recognition unit. For example, the driving system may start an emergency-stop maneuver in the case that the uncertainty data indicate that uncertainty is above a predefined threshold and/or the output data may be ignored in the case that the uncertainty data indicate that uncertainty is above the threshold.

In one embodiment as the input data, sensor signals or sensor data from at least one sensor that is observing the surroundings are used. This provides the advantage that the sensor data may be evaluated regarding their suitability for detecting the at least one object in the surroundings.

As has been explained above, the "injection" of the noise as it is part of the recognition process does not require that a noise is applied to or processed by the neural network. The injection is only virtual. All that is needed is the propagation of the variance values. However, in one embodiment, as part of the training process of the neural network (as opposed to the recognition process) the respective noise that is modelled by the respective noise model is actually applied as a part of training data to the respective node of the subset. In other words, actual samples of the noise that corresponds to the respective noise model is provided as noise data. This correspond to a real application or injection of noise. This way the neural network learns or is trained to minimize the influence of the injected noise on the training data (i.e. minimize the variance in the output) by propagating the actual injected noise at training time in the training process to the output. This way, at inference time (i.e. in the recognition process), use is made of the fact that variance of the noise is known and this variance value may be propagated analytically because the neural network learned or is trained how to deal with this type of noise injection by means of the training process at training time. The inference of noise as part of the training process can be performed on the basis of the drop-out technique which is well known in the prior art.

For performing the inventive method in a motor vehicle, an electronic control unit is provided. The inventive electronic control unit comprises a digital processing device that is designed to perform an embodiment of the inventive method. The processing device may comprise one or more processing units, e.g. a central processing unit CPU and/or signal processing unit SPU and/or graphical processing unit GPU and/or neural processing unit NPU. The processing device may comprise a software or program code that comprises computer readable instructions which cause the processing device to perform the embodiment of the method if executed by the processing device. The software or program code may be stored in a data storage of the processing device.

The invention also provides a motor vehicle comprising an autonomous driving system for automated and/or autonomous driving of the vehicle. The motor vehicle also comprises an electronic control unit that is an embodiment of the inventive control unit. The driving system is controlled on the basis of output data and uncertainty data that are both generated by the electronic control unit, i.e. on the basis of an embodiment of the inventive method. The motor vehicle may be designed as a passenger vehicle or a truck or a flying vehicle (e.g. plane or helicopter) or a motorcycle or a boat.

The invention also comprises the combinations of the features of the different embodiments.

In the following an exemplary implementation of the invention is described. The figures show:

Fig. 1  a schematic illustration of an embodiment of the inventive motor vehicle;

Fig. 2  a schematic illustration of an artificial neural network that is operated in a recognition unit of an electronic control unit of the motor vehicle;

Fig. 3  a sketch for illustrating a node in a layer of the neural network together with its preceding and its following nodes;

Fig. 4  a sketch of the node of Fig. 3 for illustrating the propagation of variance values through the neural network;

Fig. 5  diagrams showing output data and uncertainty data;

Fig. 6  a schematic illustration of input data and output data as they may be generated by the neural network; and

Fig. 7  a schematic illustration of uncertainty data that may be associated with the output data of Fig. 6.

The embodiment explained in the following is a preferred embodiment of the invention. However, in the embodiment, the described components of the embodiment each represent individual features of the invention which are to be considered independently of each other and which each develop the invention also independently of each other and thereby are also to be regarded as a component of the invention in individual manner or in another than the shown combination. Furthermore, the described embodiment can also be supplemented by further features of the invention already described.

In the figures identical reference signs indicate elements that provide the same function.

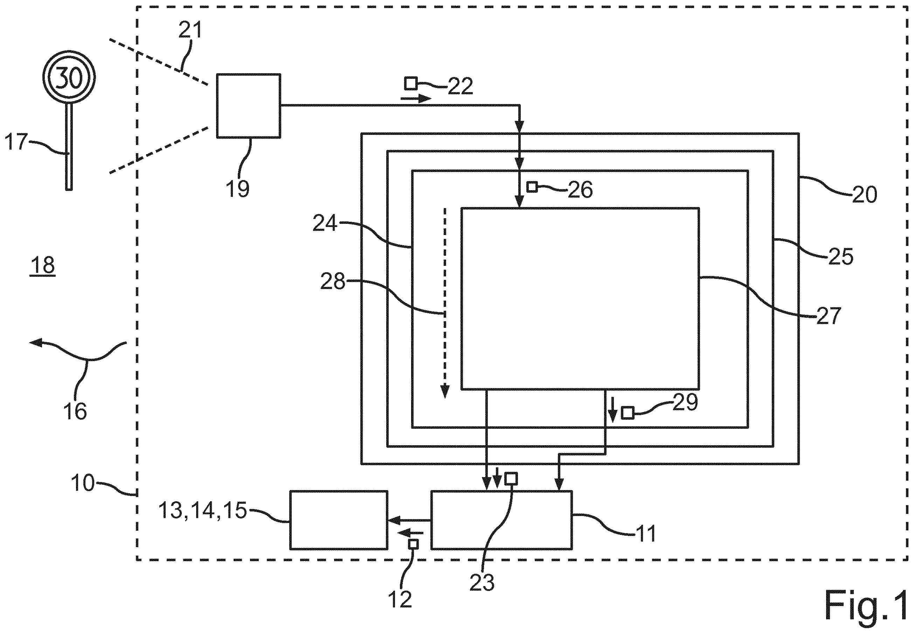

Fig. 1 shows a motor vehicle 10 that can be, for example, a passenger vehicle or a truck or one of the other vehicle types already mentioned. Vehicle 10 may be driving in an automated or autonomous mode. To this end, the vehicle 10 may comprise a driving system 11 for automated and/or autonomous driving. By means of the driving system 11, control signals 12 may be generated for controlling a steering 13 and/or an engine 14 and/or breaks 15 of vehicle 10. The driving system 11 may be designed to plan a driving trajectory 16 along which driving system 11 may drive or lead vehicle 10 by means of generating the control signals 12. Driving system 11 may comprise at least one computer for performing the automated or autonomous driving.

For planning the trajectory 16, driving system 11 may consider or take into account at least one object 17 in the surroundings 18 of the vehicle 10. Examples for objects 17 are traffic signs (as shown), other traffic participants (vehicles, cyclists, pedestrians), parked cars, traffic lights, roads, just to name a few examples. The detection and/or recognition of each object 17 in the surroundings 18 may be performed in an automated way by means of at least one sensor 19 and an electronic control unit 20. The at least one sensor 19 may provide a detection range 21 that may be directed towards the surroundings 18. The at least one sensor 19 may generate sensor signals or sensor data 22 representing or describing the surroundings 18 as it may be sensed by the at least one sensor 19 within the detection range 21. Examples for possible sensors are a camera, a radar, a lidar, an ultrasonic sensor. For example, the sensor data 22 may be image data.

The electronic control unit 20 may receive the sensor data 22. Based on sensor data 22, the electronic control unit 20 may provide output data 23 which may describe the at least one object 17 in the surroundings 18 such that knowledge about the at least one object 17 is available to the driving system 11. For example, the output data 23 may describe the shape and/or position and/or a class (vehicle/cyclist/pedestrian/traffic sign/road) of the respective object 17.

For extracting or deriving the output data 23 from the sensor data 22, the electronic control unit 20 may operate a recognition unit 24. To this end, electronic control unit 20 may comprise a processing device 24 which may be based on at least one digital processor, e.g. at least one CPU and/or GPU. The recognition unit 24 may be a software which may receive the sensor data 22 as input data 26. Recognition unit 24 may feed or provide the received input data 26 to an artificial neural network 27. Neural network 27 may be trained in such a way that based on the input data 26 the output data 23 are generated. Neural network 27 may be trained to apply a classification and/or a regression to the input data 26 in order to generate the output data 23.

Once the output data 23 are provided to the driving system 11, driving system 11 has knowledge or information about the at least one object 17 in the surrounding 18 and may then plan the trajectory 16 accordingly. This can be a continuous process such that during a movement of vehicle 10, trajectory 16 may be adapted to changes in surroundings 18.

The generation of the output data 23 from the input data 26 is a recognition process 28. This recognition process 28 is associated with an uncertainty regarding the degree of certainty or sureness that the output data 23 are actually correct. Therefore, in vehicle 10, driving system 11 may consider this uncertainty while driving the vehicle 10, e.g. while planning the trajectory 16. To this end, recognition unit 24 may also provide uncertainty data 29 that may indicate a degree of uncertainty regarding the recognition result of the recognition process 28, i.e. the uncertainty regarding the correctness of output data 23 with regards to the at least one object 17 in the surroundings 18.

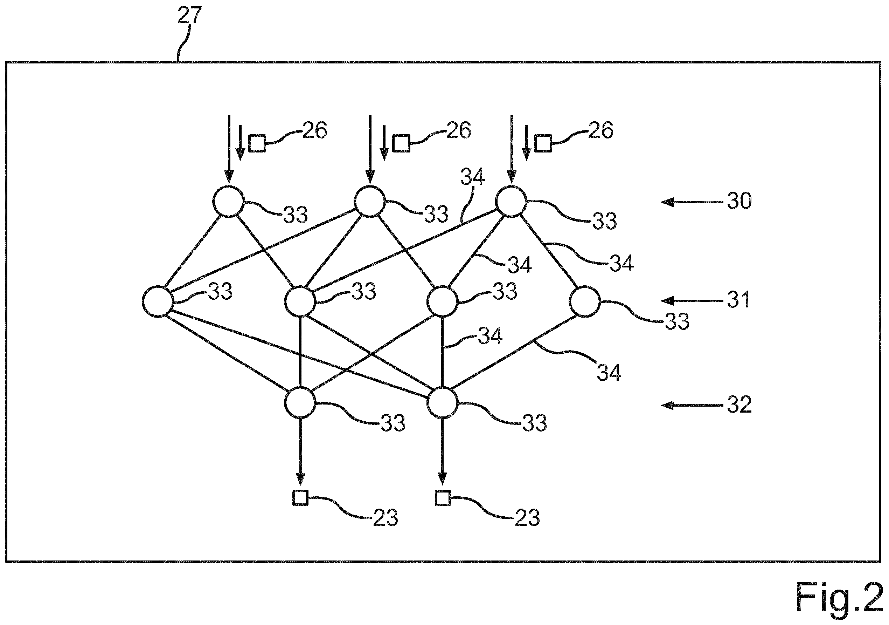

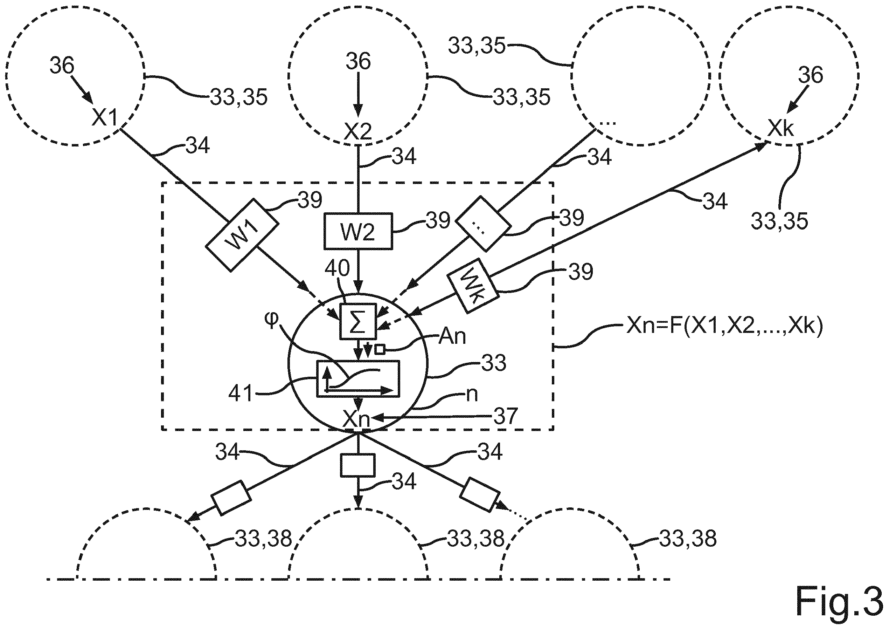

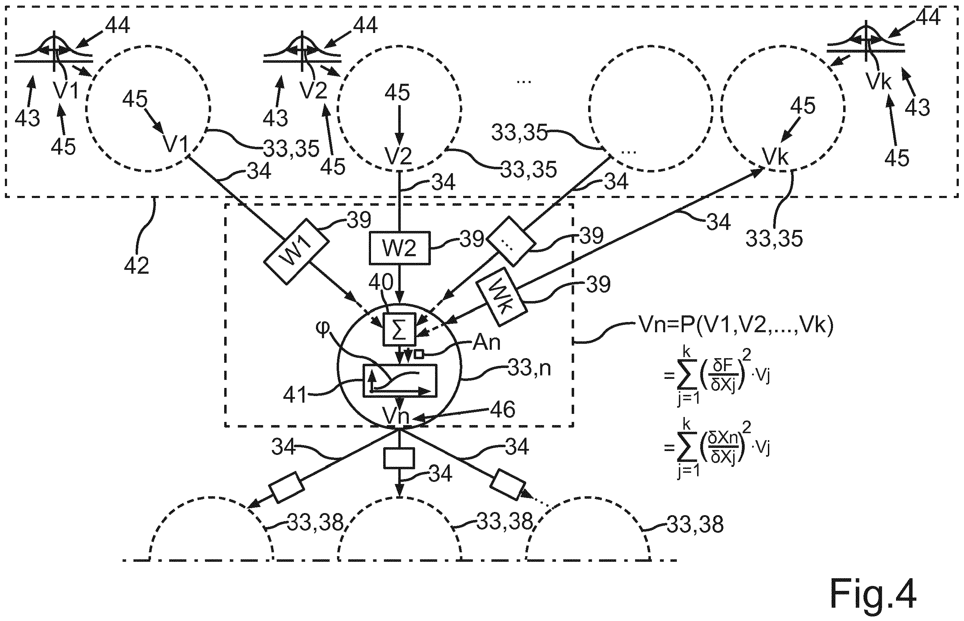

For generating the uncertainty data 29, recognition unit 24 takes into account the current state of neural network 27 as it results from the actual recognition process 28. For explaining the generation of the uncertainty data 29, in the following, the actual recognition process 28 is explained on the basis of Fig. 2 and Fig. 3, then, based on Fig. 4, the generation of the uncertainty data 29 is explained.

Fig. 2 shows one exemplary embodiment of neural network 27, i.e. one possible topology, although this topology is only exemplary. Any topology available to the skilled person may be used.

Neural network 27 may comprise at least one input layer 30, at least one hidden layer 31 and at least one output layer 32. For the sake of simplicity, only one input layer 30, only one hidden layer 31 and only one output layer 32 is shown. In each of the layers 30, 31, 32, neurons or units or nodes 33 may be provided for processing data. Each of the nodes 33 of the at least one input layer 30 may each receive at least a part of input data 26. The nodes 33 of the at least one output layer 32 may each generate at least a part of the output data 23. The at least one input layer 30 is connected to the at least one output layer 32 over the at least one hidden layer 31. The connection is defined by links 34 each of which defines a connection between two of the nodes 33. In Fig. 2 only some of the links 34 are provided with reference signs for the sake of facility of inspection.

Fig. 3 illustrates the point of view of one single node 33 within neural network 27. For the following explanation, this node is referred to as node n. The node n may be part of a hidden layer 31 or an output layer 32. From the point of view of node n, by means of the links 34 several preceding nodes 35 are defined. Fig. 3 shows that node n may have k preceding nodes 35 each of which provides an output value or activation value 36 to node n over the respective link 34. The activation values 36 are denoted as X1, X2,..., Xk for the k preceding nodes 35. On the basis of the received activation values 36, node n may itself generate an output value or activation value 37 which is denoted as Xn. In the case that node n is part of a hidden layer 31, the activation value 37 of node n may be provided to following nodes 38 over respective links 34. In the case that node n is part of an output layer 32, its activation value 37 may become part of the output data 23.

From the point of view of node n, by calculating its activation value 37 from the activation values 36 of the preceding nodes 35, the activation value 37 is a function of the activation values 36 of the preceding nodes 35. This function comprises all the calculation steps needed for obtaining activation value 37 from activation values 36. This function is termed here as firing function F such that the following equation applies:

$$Xn = F(X1, X2,..., Xk)$$

wherein the symbol "..." indicates that all preceding nodes from preceding node number 1 to the last preceding node number k shall be considered.

In Fig. 3, one possible way of calculating the activation level 37 is illustrated. Each link 34 may be associated with weighting value 39. For the illustrated preceding nodes 35, the weighting values 39 are denoted here as W1, W2,..., Wk. Furthermore, a summing function 40 and an activation function 41 may be provided for node n. The activation function 41 is denoted here as function φ (phi).The activation values 36 from the preceding nodes 35 may each be weighted with the respective weighting value 39 from the respective link 34, the weighted activation values may be summed up by means of the summing function 40, which may result in an activation level An, which represents the summed-up weighted activation values 36. The activation level An may be used as an input value for the activation function 41. The output of activation function 41 may then be used as activation level 37 of the node n. For the example shown in Fig. 3, the firing function F may therefore be expressed by the following equation:

$$Xn = \varphi\ (\ W1 * X1 + W2 * X2 + \ldots + Wk * Xk\ )$$

wherein "..." has the same meaning as explained above. The activation function φ may for example be based on one of the following functions: tanh, sinh, ReLU.

Fig. 4 illustrates, how on the basis of the firing function F a propagation function P may be provided for calculating the uncertainty data 29. Fig. 4 shows node n and its preceding nodes 35 (and its possible following nodes 38) in the same manner as is done in Fig. 3.

After or while processing the input data 26, for each node 33 of the neural network 27, its respective activation value 36, 37 is known. In other words, neural network 27 has taken a specific state that results from processing input data 26 for generating output data 23 in recognition process 28. Based on this current state, the uncertainty data 29 are generated.

To this end, a predefined subset 42 of nodes 33 is selected. In Fig. 4, it is assumed, that the preceding nodes 35 of node n belong to the subset 42. There may be also other nodes 33 that belong to subset 42. For example all nodes 33 belonging to one specific hidden layer 31 or to several hidden layers 31 may be part of subset 42.

For each node 33 that is part of subset 42, a predefined noise model 43 is associated. For example, a zero-mean Gaussian noise 44 maybe modelled or described by the respective noise model 43. The noise model 43 provides a respective variance value 45 of the noise 44. For the preceding nodes 35 of node n, the respective variance values 45 are denoted as V1, V2,..., Vk.

Starting from the nodes 33 belonging to subset 42, the variance values 45 are propagated through the neural network 27 to the at least one output layer 32 in a similar manner as has been done for the activation values X1, X2,..., Xk, Xn. The variance values resulting at the nodes 33 of the at least one output layer 32 may then be used as uncertainty data 29.

For propagating the variance values 45 through the neural network 27, exemplary calculations are explained here for node n, which represents any node that follows the nodes 33 that are part of subset 42.

For node n, from every preceding node 35, the respective variance value 45 may be received and from the received variance values 45, a variance value 46 of node n may be calculated on the basis of the variance propagation function P, resulting in the following equation:

$$Vn = P\ (\ V1, V2,\ldots, Vk\ )$$

wherein Vn ist the variance value 46 of node n.

The propagation function P may be based on the firing function F of node n. The partial derivative or the first order Taylor series expansion of firing function F may be used resulting in the following equation:

$$Vn = \sum_{j=1}^{k} \left(\frac{\delta F}{\delta Xj}\right)^2 \cdot Vj$$

wherein δF/δXj is the partial derivative of firing function F with regard to activation value Xj. The equation states that the squared value of the partial derivative at the respective activation value X1, X2,..., Xk is used as a factor for the respective received variance value V1, V2,..., Vk. Another way of expressing the propagation function P is given by the following equation:

$$Vn = \sum_{j=1}^{k} \left(\frac{\delta Xn}{\delta Xj}\right)^2 \cdot Vj$$

The definition of the respective partial derivative depends on the specific activation function φ that is used in neural network 27. For deriving the partial derivative, the skilled person may refer to mathematical literature.

Note that the illustrations in Fig. 3 and Fig. 4 may not reflect the actual structure of neural network 27. For example, the links 34 and the activation values 36, 37 may also be represented by matrices and the described calculations may be implemented as matrix calculations, as is known to the skilled person concerned with neural networks.

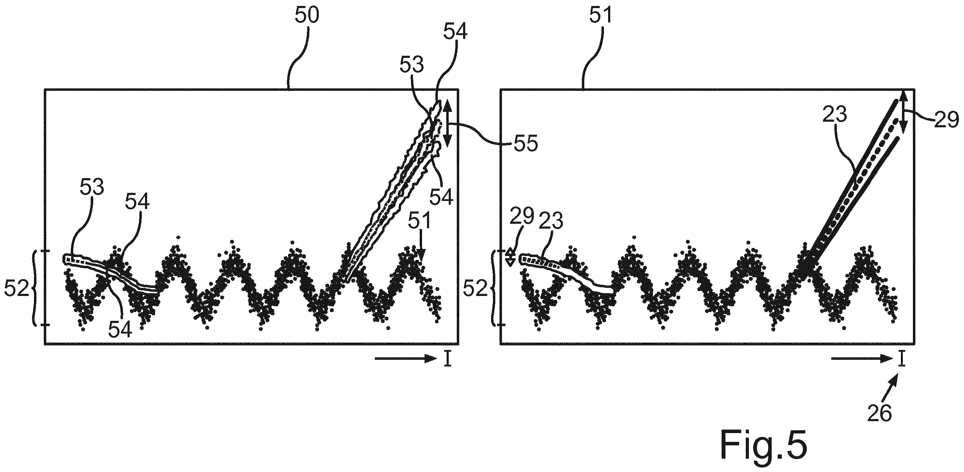

Fig. 5 illustrates the application of the method described in connection with Fig. 4 to a neural network that provides a regression calculation. In a diagram 50 the result for the described MC sampling is shown wherein in a diagram 51 the result for the above method is shown. As can be seen, the described method provides results very similar to those of the MC sampling.

The underlying experiment provided input data I in the form of values in a range from -10 to 30. First, the MC sampling is explained.

The neural network was trained on the basis of ground truth data 51 associating the input data I with specific ground truth output data 52 such that the ground truth output data 52 correspond to values of a sine function of the input data I. However, for the training, not all input data I were provided or used, but only the input data I in the range from 0 to 20. In other words, during training the neural network did not see the ground truth data 51 for the input data I in the range from -10 to 0 and in the range from 20 to 30. Accordingly, the output data 53 of the neural network for input data I in the range from -10 to 0 and 20 to 30 deviate from the ground truth data 51.

Furthermore, on the basis MC sampling additional recognition results 54 were calculated which define uncertainty data 55 indicating that the further the input data I deviate from the trained interval 0 to 20 of the input data I, the larger the uncertainty is, which is expressed by the size of the interval 55 defined by the uncertainty data 54.

For obtaining uncertainty data 54 by means of MC sampling, several repetitions of the recognition process 28 are necessary which demands a corresponding computational power of processing device 25, if sensor data 22 are supposed to be processed in real-time.

An important parameter of the MC sampling is the dropout rate p for single nodes of the network during the repetition of the recognition process 28 for generating the additional recognition results 54.

Based on the method illustrated in Fig. 4 and setting the variance values 45 of the noise models 43 to p*(1-p), the same result as with the MC sampling can be obtained without the need of performing the recognition process 28 repeatedly, but rather only one repetition process 28 is needed (for obtaining the output data 23). The uncertainty data 29 nevertheless indicate the same uncertainty level as in the case of MC sampling.

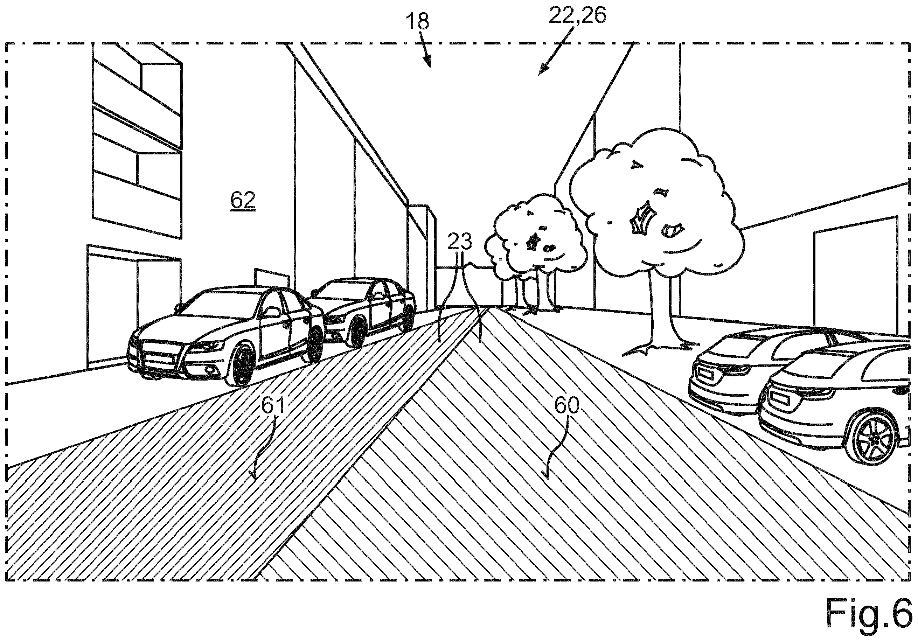

Fig. 6 illustrates the result of an experiment based on sensor data 22 that may be, for example, image data of a sensor 19 that is a camera. The sensor data 22 were provided to recognition unit 24 as input data 26. As a result, output data 23 were generated that indicate which part of input data 26, i.e. which part or region of the image belongs to the driving lanes 60, 61 and which part or region constitutes a background 62 of surroundings 18. The lanes 60, 61 and the background 62 each may constitute an object 17 of surroundings 18. Lane 60 may be the so called ego-lane that the vehicle 10 should follow or use.

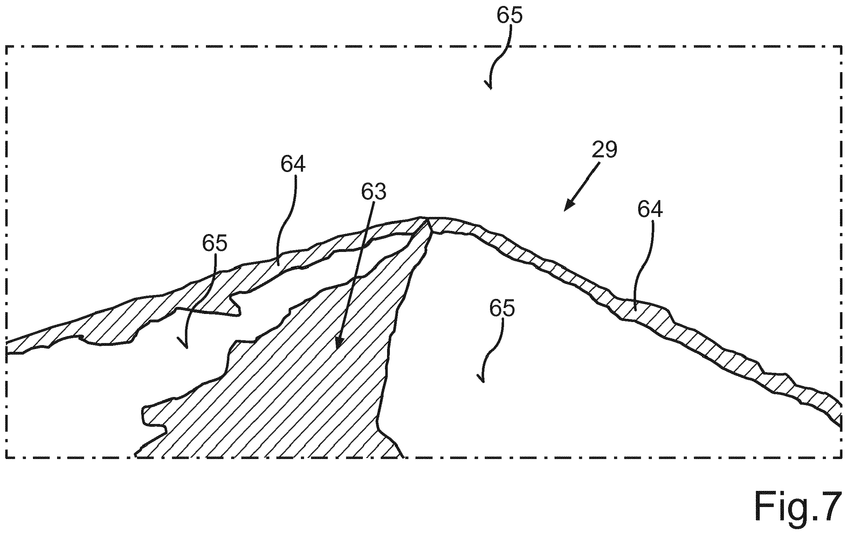

Fig. 7 illustrates how uncertainty data 29 may be associated to the output data 23 on the basis of the method according to Fig. 4. For example, for each pixel of an image, a respective recognition result may be provided as the output data 23, for example, indicating, whether this pixel is showing lanes 60 or 61 or background 62 (see Fig. 6). Likewise, for each pixel, a variance value Vn may be provided indicating the uncertainty. The may express the epistemic uncertainty per pixel. The larger the variance value, the larger the uncertainty is. Fig. 7 illustrates, that the border 63 between lanes 60 and 61 and the edges 64 of the lanes 60, 61 cause uncertainty to a higher degree (larger variance values) than regions 65 where the recognition result is clear or certain.

In the following, a preferred embodiment of the invention is described.

We start with the following assumptions:

1. We approximate the distribution of the noise in the hidden units (nodes of the at least one hidden layer) in the neural network as Gaussian.
2. We assume that the hidden units are independent random variables with regard to the noise.

Given these assumptions, we can approximate the output of dropout based Monte-Carlo sampling techniques with uncertainty propagation (which is a developed field in itself). We can say that dropout induces a distribution of the n-th activation of a hidden unit in the neural network with a variance given analytically by:

$$p(1-p)a\_n^2$$

where p is the dropout probability or drop-out rate and a is the activation magnitude and ^2 indicates the square operation.

Then, we propagate this uncertainty (given by the variance) using a first-order Taylor expansion at the non-linearities in the output of the network (it is applied to the output because this is the quantity we are interested in, but in principle it can be applied to any stage in the network).

In the case where there are no non-linearities in the case of Gaussian noise applied only to the 2nd to last layer, then the approximation is actually the correct analytical solution.

As illustrated in the example of Fig. 5, we trained a model on a simple sinusoidal wave between 0 and 20, and we should see an increasing epistemic uncertainty as we move away from this trained data distribution. Indeed we see this with i.e. Monte-Carlo based sampling, but we also see that this matches perfectly with the analytical solution hereby provided.

Another way of expressing the calculation of the variance values is the following:

At each layer, an activation value fi of a node i is a function of input activation values $x_j$ of all the preceding nodes j (with j the index of the preceding nodes). If the standard deviation is denoted as $\sigma$ (such that $\sigma^2$ is the variance value), the following equation may be used for calculating the variance value of a given node i:

$$\sigma_{f_i} = \sqrt{\sum_j (\frac{\partial f_i}{\partial x_j} \sigma_{x_j})^2}$$

where $\sigma_{fi}$ is the standard deviation of the activation value $f_i$ and $\sigma_{xj}$ is the standard deviation of the respective input activation value $x_j$.

This approximation progressively gets worse the more layers we place between dropout and the output, but usually dropout is placed at the end anyway.

Removing the need for sampling means that we can have uncertainty estimates that are at best identical to an infinite number of samples (if you have a regression with no non-linearities with Gaussian noise regularization). At worse, it will still be only as bad as the 1st order Taylor expansion (if placed before the last layer).

Overall, the example shows how a sample-free approximation of an epistemic uncertainty measure in an artificial neural network is provided by the invention.

## Claims

1.  Method for estimating the uncertainty of a recognition process (28) in a recognition unit (24), wherein in the recognition process (28), the recognition unit (24) receives input data (26) describing at least one object (17) in surroundings (18) of the recognition unit (24) and generates output data (23) describing a recognition result concerning the at least one object (17), wherein by the method uncertainty data (29) regarding the recognition result is determined, wherein the recognition unit (24) operates an artificial neural network (27) that comprises at least one input layer (30) with nodes (33) for receiving the input data (26) and at least one output layer (32) with nodes (33) for generating the output data (23) and at least one hidden layer (31) with nodes (33) for connecting the at least one input layer (30) to the at least one output layer (32), wherein the nodes (33) of the at least one hidden layer (31) and of the at least one output layer (32) are each linked to respective preceding ones (35) of the nodes (33) of the network (27) and in the recognition process (28) the nodes (33) generate a respective activation value (37) which is calculated by means of a predefined firing function (F) from the activation values (36) of the respective preceding nodes (35), **characterized in that** for a predefined subset (42) of the nodes (33) of the network (27) a respective noise model (43) of a noise (44) comprising a variance value (45) is associated with each of the nodes (33) of the subset (42), and starting from the nodes (33) of the subset (42) the variance value (45) of the respective associated noise model (43) is propagated through the neural network (27) to the at least one output layer (32) wherein propagating the variance values (45) comprises that at each node (n) that receives the variance values (45) of its respective preceding nodes (35), the variance value (Vn) of that node (n) is calculated from the variance values (V1, V2,...,Vk) of the respective preceding nodes (35) by means of a predefined variance propagation function (P), and
the resulting variance values (Vn) of the nodes (33) of the at least one output layer (32) are provided as the uncertainty data (23).

2.  Method according to claim 1, wherein the variance propagation function (P) comprises that the respective variance value (45) of each of the preceding nodes (35) is weighted by a weighting factor that is based on the partial derivative of the firing function or a predefined approximation of the partial derivative, wherein the partial derivative is calculated with respect to the activation value (36) of that respective preceding node (35).

3.  Method according to claim 2, wherein in the variance propagation function (P) a value of the local partial derivative or its approximation is squared and the squared value is used as a factor for the respective variance value (45).

4.  Method according to any preceding claim, wherein the variance propagation function (P) comprises that the squared value of the first order Taylor expansion of the firing function (f) is used.

5.  Method according to any of the preceding claims, wherein the firing function (f) of each respective node (33) comprises the steps of weighting the respective activation value (36) of each preceding node (35) with a respective individual link weighting value (39), summing-up the weighted activation values and applying an activation function $\varphi$ to the summed-up weighted activation values (An), wherein the output of the activation function $\varphi$ is the activation value (37) of the node (33) itself.

6.  Method according to any of the preceding claims, wherein the respective noise model (43) provides a variance value (V1, V2, Vk) that is a function of the squared value of the activation value (36) of the node (33) the model is associated to.

7.  Method according to any of the preceding claims, wherein for modelling the noise (44) in the respective noise model (43), a predefined drop-out rate p of the nodes (33) of the subset (42) is defined and the variance value (V1,V2,Vk) is proportional to p*(1-p) or wherein the respective noise model (43) models a predefined analytically-defined noise (44), in particular a Gaussian noise.

8.  Method according to any of the preceding claims, wherein the recognition process (28) provides output data (23) that comprise a regression calculation for the input data (26).

9.  Method according to any of the preceding claims, wherein on the basis of the uncertainty data (29), a driving system (11) for automated and/or autonomous driving of a vehicle (10) is controlled.

10. Method according to any of the preceding claims, wherein as the input data (26), sensor data (22) from at least one sensor (19) that is observing the surroundings is provided.

11. Method according to any of the preceding claims, wherein as part of a training process of the neural network (27) the respective noise (44) that is modelled by the respective noise model (43) is applied as a part of training data to the respective node (33) of the subset (42).

12. Electronic control unit (20) comprising a digital processing device (25) that is designed to perform a method according to any of the preceding claims.

13. Motor vehicle (10) comprising an driving system (11) for automated and/or autonomous driving of the vehicle (10) and comprising an electronic control unit (20) according to claim 12, wherein the driving system (11) is controlled on the basis of output data (23) and uncertainty data (29) of the electronic control unit (20).

Fig.1

EP 3 702 971 A1

Fig.2

Fig.3

$X_n = F(X_1, X_2, ..., X_k)$

Fig.4

$$Vn=P(V1,V2,...,Vk)$$

$$=\sum_{j=1}^{k}\left(\frac{\delta F}{\delta Xj}\right)^{2}\cdot Vj$$

$$=\sum_{j=1}^{k}\left(\frac{\delta Xn}{\delta Xj}\right)^{2}\cdot Vj$$

EP 3 702 971 A1

Fig.5

EP 3 702 971 A1

Fig.6

Fig.7

Europäisches
Patentamt

European
Patent Office

Office européen
des brevets

# EUROPEAN SEARCH REPORT

Application Number

EP 19 15 9652

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Harri Lappalainen ET AL: "Bayesian Nonlinear Independent Component Analysis by Multi-Layer Perceptrons" In: "Advances in Independent Component Analysis", 1 January 2000 (2000-01-01), Springer-Verlag, XP055608862, ISBN: 978-1-4471-0443-8 pages 93-121, DOI: 10.1007/978-1-4471-0443-8_6, | 1-7, 10-12 | INV. G06N3/04 G06N3/08 B60W30/09 G05D1/00 B60W50/04 B60W50/00 |
| Y | * abstract * * page 1, line 1 - line 25 * * page 4, line 27 - page 9, line 17 * * figures 3, 4 * * page 19, line 16 - page 26, line 38 * | 8,9,13 | |
| X | HONKELA A ED - DIBAZAR A A ET AL: "Approximating nonlinear transformations of probability distributions for nonlinear independent component analysis", NEURAL NETWORKS, 2004. PROCEEDINGS. 2004 IEEE INTERNATIONAL JOINT CONFERENCE ON, IEEE, PISCATAWAY, NJ, USA, vol. 3, 25 July 2004 (2004-07-25), pages 2169-2174, XP010759255, DOI: 10.1109/IJCNN.2004.1380955 ISBN: 978-0-7803-8359-3 | 1-7,12 | |
| A | * abstract * * page 2169, left-hand column, line 1 - page 2172, left-hand column, line 41 * * page 2173, right-hand column, line 15 - line 22 * | 8,9,13 | |

TECHNICAL FIELDS SEARCHED (IPC)

G06N
B60W
G05D

-/--

The present search report has been drawn up for all claims

| Place of search | Date of completion of the search | Examiner |
|---|---|---|
| The Hague | 26 July 2019 | Mandato, Davide |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 19 15 9652

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | RHIANNON MICHELMORE ET AL: "Evaluating Uncertainty Quantification in End-to-End Autonomous Driving Control", ARXIV.ORG, CORNELL UNIVERSITY LIBRARY, 201 OLIN LIBRARY CORNELL UNIVERSITY ITHACA, NY 14853, 16 November 2018 (2018-11-16), XP081051099, | 8,9,13 | |
| A | * abstract * * page 1, left-hand column, line 1 - right-hand column, line 29 * * page 2, right-hand column, line 15 - page 3, right-hand column, line 33 * * figure 1 * | 1,12 | |
| A | SIMON J. JULIER ET AL: "New extension of the Kalman filter to nonlinear systems", PROCEEDINGS SPIE 7513, 2009 INTERNATIONAL CONFERENCE ON OPTICAL INSTRUMENTS AND TECHNOLOGY, vol. 3068, 28 July 1997 (1997-07-28), page 182, XP055608764, 1000 20th St. Bellingham WA 98225-6705 USA ISSN: 0277-786X, DOI: 10.1117/12.280797 ISBN: 978-1-5106-2781-9 * abstract * * page 1, line 1 - page 4, line 22 * | 1-3,5,12 | TECHNICAL FIELDS SEARCHED (IPC) |

-/--

The present search report has been drawn up for all claims

| Place of search | Date of completion of the search | Examiner |
|---|---|---|
| The Hague | 26 July 2019 | Mandato, Davide |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

Europäisches
Patentamt

European
Patent Office

Office européen
des brevets

# EUROPEAN SEARCH REPORT

Application Number

EP 19 15 9652

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Pierre Baldi ET AL: "Understanding dropout", Proceedings of the 27th annual conference on Neural Information Processing Systems (NIPS'13), 5 December 2013 (2013-12-05), XP055193473, Retrieved from the Internet: URL:http://papers.nips.cc/paper/4878-understanding-dropout.pdf [retrieved on 2015-06-03] * abstract * * page 6, line 19 - line 29 * | 1,6,7,12 | |

TECHNICAL FIELDS
SEARCHED      (IPC)

The present search report has been drawn up for all claims

| Place of search | Date of completion of the search | Examiner |
|---|---|---|
| The Hague | 26 July 2019 | Mandato, Davide |

EPO FORM 1503 03.82 (P04C01)